# EUROPEAN PATENT SPECIFICATION

(11) **EP 2 779 613 B1**
(45) Date of publication and mention of the grant of the patent: **03.10.2018**
(21) Application number: 14154963.4
(22) Date of filing: 13.02.2014
(51) Int. Cl.: H04N 1/00, G06F 17/30, H04N 1/32

(54) **Document processing apparatus, document processing method, and document processing computer program product**
Dokumentenverarbeitungsvorrichtung, Dokumentenverarbeitungsverfahren und Dokumentenverarbeitungscomputerprogrammprodukt
Appareil de traitement de documents, procédé de traitement de documents et produit de programme informatique de traitement de documents

(30) Priority: 12.03.2013 JP 2013049572
(43) Date of publication of application: 17.09.2014
(73) Proprietor: Ricoh Company, Ltd., Tokyo 143-8555 (JP)
(72) Inventor: Ohguro, Yoshihisa, Ohta-ku, Tokyo 143-8555 (JP)
(74) Representative: Round, Edward Mark

(56) References cited:
- EP-A1- 2 453 367
- EP-A1- 2 560 360
- JP-A- 2006 211 261
- JP-A- 2009 027 648
- JP-A- 2011 155 548
- US-A1- 2005 041 860
- US-A1- 2005 063 009
- US-A1- 2012 263 380

## Description

### BACKGROUND OF THE INVENTION

### 1. Field of the Invention

The present invention relates to a document processing apparatus, a document processing method, and a document processing computer program product.

### 2. Description of the Related Art

A technique that automatically names a document using an automatically generated character string, such as a date and a serial number, is generally known as an automatic document naming method implemented when scanned document image data is saved. Another known naming technique is to name a document by combining the automatically generated character string, such as the date or the serial number, with a fixed character string specified in advance by a user. The document name consisting of the character string automatically generated from the date or the serial number, however, cannot represent contents of the document and it is difficult to know the contents of the document unless the document image data is actually viewed. In addition, the technique that uses the fixed character string for naming the document requires a step of inputting the fixed character string in advance. To scan a document consisting of a large number of documents, therefore, the fixed character string needs to be input each time a document is scanned, and this operation is troublesome.

To solve the foregoing problems, known techniques employ optical character recognition (OCR) to extract character information from the document image data and then extract a title from the character information (see, for example, Japanese Laid-open Patent Publication No. 2007-122403, Japanese Laid-open Patent Publication No. 2008-077454, and Japanese Laid-open Patent Publication No. 2002-297629), thereby enabling assignment of a document name that represents contents of the document.

If a character code system used by a device that names a document is different from that of a device for displaying the document name, what is called "character corruption" occurs when the document name is displayed, resulting in a situation in which the document name is not displayed correctly. When the character corruption occurs in the document name, a clue to know the contents of the document cannot be obtained, which reduces usability for the user when displaying.

To prevent the character corruption of the document name from occurring, the device for naming needs to know the character code system of the device for displaying. However, it is very often difficult to identify the device for displaying, for example, when the document image data is saved in a portable recording medium and used in another device. If the device for displaying is identifiable in advance, the device for naming can cope with the problem by specifying the character code used in naming the document. This approach, however, requires operation to specify the character code each time a document is scanned, which reduces usability of the device for naming.

In view of the foregoing situation, there is a need to provide a document processing apparatus, a document processing method, and a document processing computer program product that can prevent character corruption of a document name and improve usability for the user.

US2012/0263380 discloses an MFP comparing the character encoding scheme of an extracted OCR document name with that of a display device, and using that OCR document name for the displayed document even if the schemes differ, provided that the MFP can convert the OCR result into Unicode.

### SUMMARY OF THE INVENTION

It is an object of the present invention to at least partially solve the problems in the conventional technology.

The invention is in the document processing apparatus of Claim 1 and the corresponding method of Claim 6 and program product of Claim 7.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating an exemplary major functional configuration of a document processing apparatus;
FIG. 2 is a flowchart illustrating outlined steps for naming a document;
FIG. 3 is a diagram illustrating an exemplary operation screen displayed on an operation display unit;
FIG. 4 is a diagram illustrating another exemplary operation screen displayed on the operation display unit;
FIG. 5 is a block diagram illustrating an exemplary internal configuration of a document naming section;
FIG. 6 is a flowchart illustrating steps for naming a document;
FIG. 7 is a flowchart illustrating detailed steps of document naming processing;
FIG. 8 is a diagram illustrating still another exemplary operation screen displayed on the operation display unit;
FIG. 9 is a diagram illustrating an exemplary hardware configuration of the document processing apparatus; and
FIG. 10 is a diagram illustrating an exemplary system configuration of the document processing apparatus.

### DETAILED DESCRIPTION OF THE PREFERRED EMBODIMENTS

The following describes a document processing apparatus, a document processing method, and a document processing program according to an embodiment of the present invention with reference to the accompanying drawings. The embodiment is not intended to limit the present invention. In the drawings, like or corresponding parts are identified by the same reference numerals.

### Embodiment

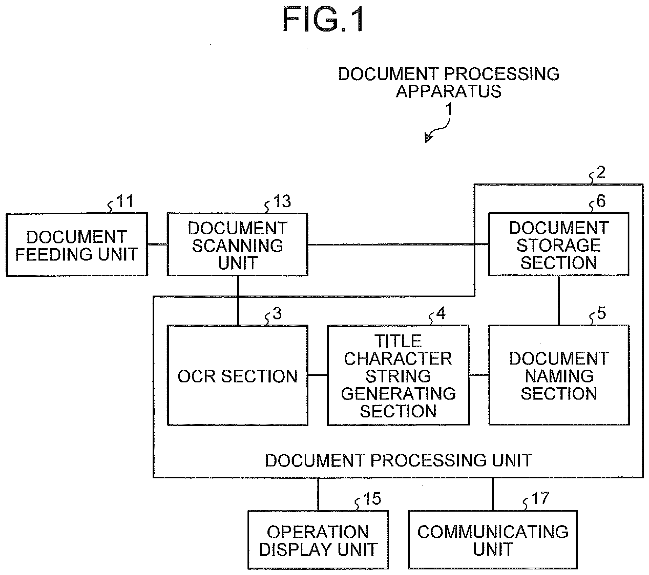

FIG. 1 is a block diagram illustrating an exemplary major functional configuration of a document processing apparatus 1 according to the embodiment. As illustrated in FIG. 1, the document processing apparatus 1 comprises a document processing unit 2, a document feeding unit 11, a document scanning unit 13, an operation display unit 15, and a communicating unit 17. The document feeding unit 11 and the document scanning unit 13 input document image data to be processed by the document processing unit 2. The operation display unit 15 is an exemplary display unit.

The document feeding unit 11 comprises, for example, an automatic document feeder and conveys a document bundle placed on a document table not illustrated, one page at a time in sequence, onto the document scanning unit 13. The document scanning unit 13 comprises, for example, a light source and a CCD image sensor. The document scanning unit 13 optically scans each document page conveyed from the document feeding unit 11 to thereby generate image data of a document image of each page (character image data). The generated document image data of each page is output to an OCR section 3 and a document storage section 6 of the document processing unit 2.

The operation display unit 15 comprises, for example, a display panel integrated with a touch panel. The operation display unit 15 is used for inputting operations required for naming a document, displaying document bundle data stored in the document storage section 6 together with a corresponding document name as will be described later, and/or the like. The communicating unit 17 transmits and receives data to and from an external device (a computer system) via a communication line such as a LAN, the Internet, a telephone network, a dedicated network, and an intranet. In the embodiment, the document bundle data is transmitted to the external device via the communicating unit 17 through, for example, mail transmission or folder transmission.

The document processing unit 2 comprises, as its main functional sections, the OCR section 3, a title character string generating section 4, a document naming section 5, and the document storage section 6. The document processing unit 2 performs processing of automatically naming a document (automatic document naming processing) based on the document image data input thereto by the document feeding unit 11 and the document scanning unit 13.

The OCR section 3 performs image processing on each page of the document image data input from the document scanning unit 13 and thereby extracts text data (character information) from the document image data (OCR processing). The OCR processing analyzes features of the image data to determine likelihood of a character and convert the image data to a character code. The OCR processing yields, as an OCR processing result, accompanying data that includes the position of each character within the image, character size, character recognition score, and language information (grammatical information, such as the part of speech of a word that includes the characters in question and the position of the characters in question within the word), in addition to text data of the corresponding page. The acquired OCR processing result is output to the title character string generating section 4.

The title character string generating section 4 extracts a representative character string (hereinafter referred to as a "title character string") that represents contents of each page from among the text data of the corresponding page based on the OCR processing result of the page. The extracted title character string is output to the document naming section 5.

The technique to extract the title character string is not specified and can be achieved by appropriately using any well-known technique. For example, generally, a title or a headword is positioned at an upper portion of a page for a document in a horizontal writing format and at the right end portion of a page for a document in a vertical writing format. One possible technique to extract the title character string based on the foregoing point may, for example, extract the title character string by determining the likelihood that a character string is a title or a heading, the character string being positioned at the upper portion of the page within the image of the page in the horizontal writing format and at the right end portion of the page within the image of the page in the vertical writing format. Another possible technique to extract the title character string may, based on a point that the title or the heading generally has a large character size, extract the title character string by determining the likelihood that a character string is a title or a heading, the character string having the largest character size in the page. In addition, a title character string that includes a meaningful word is often more useful than a title character string consisting of meaningless characters. Therefore, a technique that grammatically analyzes text data of the OCR processing result and extracts a character string that deviates less from grammatical rules may be used. Still another possible technique is to combine the foregoing extraction techniques and comprehensively evaluate a plurality of elements, such as the position within the image and the grammatical analysis result, thereby generating a character string that directly represents the contents of the corresponding page as the title character string.

The document naming section 5 creates a character string to be used as the name of the document bundle data (document name) based on the title character string of each page. The created document name is output to the document storage section 6.

The document storage section 6 uses the document name input thereto from the document naming section 5 and stores therein the document image data input thereto from the document scanning unit 13 in units of a document bundle, that is, the document image data of the pages constituting the document bundle is stored as one file (document bundle data).

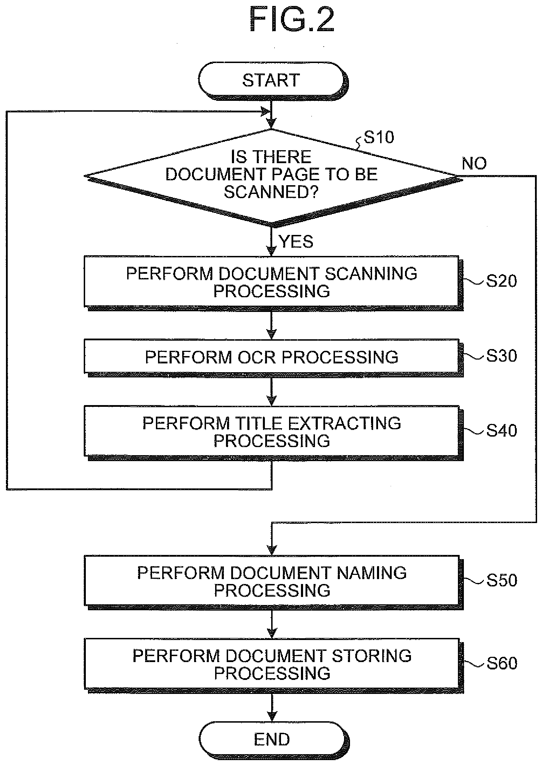

The following describes outlined steps for naming a document, performed by the document feeding unit 11 and the document scanning unit 13 scanning the document bundle and the document processing unit 2 performing the automatic document naming processing concurrently therewith in the document processing apparatus 1 with reference to FIG. 2.

As illustrated in FIG. 2, with the document consisting of a plurality of document pages placed on the document table at the start of scan treated as one document bundle, the document processing apparatus 1 repeatedly performs the process from step S20 to step S40 until no more document pages are present on the document table. Specifically, if there are document pages left on the document table to be read next (Yes at step S10), the document scanning unit 13 performs document scanning processing and generates document image data of the document page conveyed by the document feeding unit 11 and to be read next (step S20).

Next, the OCR section 3 in the document processing unit 2 performs OCR processing on the document image data generated at step S20 to thereby extract text data (step S30) .

The title character string generating section 4 performs title extracting processing to generate a title character string based on an OCR processing result at step S30 (step S40). The title character string generating section 4 appropriately uses the above-described extraction technique to extract a plurality of candidates for the title character string. The title character string generating section 4 then evaluates, for each of the extracted candidates for the title character string, appropriateness for a character string to represent contents of a corresponding page and ranks the candidates. Title candidate information is thereafter created by associating each title character string candidate with its evaluation ranking and then appended to the OCR processing result.

When the title extracting processing is completed, step S10 is performed again. If all document pages on the document table have been scanned and there are no more document pages to be scanned (No at step S10), step S50 is performed. At this time, a plurality of candidates for the title character string have been extracted for each of the document pages constituting the document bundle.

At step S50, the document naming section 5 performs document naming processing and creates a document name based on the title candidate information of the OCR processing result. The document naming processing will be described in detail later. Briefly, for example, among the candidates for the title character string extracted from the document image data of the first page of the document bundle at step S40, the title character string candidate that ranks first in the evaluation ranking is selected as the document name character string to serve as a basis for the document name.

Thereafter, the document storage section 6 performs document storing processing to store therein the document image data of each page together with the OCR processing result as document bundle data using the document name created at step S50 (step S60). At this time, the document name created at step S50 is used as the file name for the document bundle data.

It is here noted that the document processing unit 2 creates the document name from the text data acquired as the OCR processing result as described above. This means that the character code of the document name is the character code of the OCR processing result. This involves a problem of discrepancy between the character code of the document name (the character code of the OCR processing result) and a character code displayable by a computer system in which the document name is displayed, for example. Specifically, if the character code of the document name differs from the character code displayable by the computer system, what is called "character corruption" may occur in the document name, so that the document name is displayed as a meaningless symbol string unintelligible to the human. The character corruption not only results in that a clue to know the contents of the document cannot be obtained, but also considerably reduces usability because the displayed meaningless symbol string looks absurd.

Assume, for example, that a computer system capable of displaying only European languages displays a document name having the Japanese SJIS code set as its character code. The characters each represented in two bytes are displayed as meaningless one-byte symbol strings.

As another example, a computer system capable of displaying the SJIS code displays "t 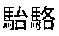 hone" for a Spanish word "te'le'phone" (e': e with an acute accent). This is due to the following reason: specifically, "e' (0xE9)" is the first byte followed by "l (0x6C)" or "p (0x70)" as the second byte, which causes "e'l (0xE9 0x6C)" and "e'p (0xE9 0x70)" to coincide with kanji characters " 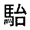 " and " 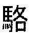 ", respectively.

In this way, the document name may not be displayed correctly, if the character code of the document name differs from the character code displayable on a device, such as a computer system, on which the document name is to be displayed. This phenomenon occurs not only when the document name is displayed on the document processing apparatus 1 that performs the automatic document naming processing, but also when the document bundle data is used for browsing, editing, and other tasks while displaying the document name in a device different from the document processing apparatus 1.

The document bundle data stored in the document storage section 6 of the document processing apparatus 1 may be used in another device in the following two representative cases: specifically, (1) mail transmission is performed in which the document bundle data is attached to an e-mail message as an attached file and sent to another device; and (2) folder transmission is performed in which the document bundle data is written in a storage device of another device using, for example, the SMB protocol.

When it is assumed that the document bundle data is transmitted to and used by another device as represented by the above-described cases (1) and (2), the character code displayable on the device at the destination needs to be taken into consideration. If the device at the destination is fixed or otherwise known, the character code displayable on the device in question is set in advance. If the device at the destination can display Japanese, the SJIS code, for example, can be used. Alternatively, if the device at the destination can display French, the Latin-1 character code, for example, can be used.

In contrast, if the device at the destination can be any type of device and is unknown, it is difficult to know in advance the character code displayable on the device at the destination. A solution to such a case is to establish a rule for determining the character code displayable on the device at the destination in advance or use printable ASCII code characters that do not cause character corruption.

Problems, however, do exist that are unavoidable even with these solutions. One exemplary trouble occurs when the document is named using the Japanese character code. For example, MS-DOS (a registered trademark) uses the SJIS code by default and, with the SJIS code, "¥" may be used in the second byte. More specifically, that corresponds to a kanji character " 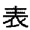 " and a katakana " 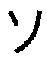 ". In contrast, Windows (a registered trademark) uses "¥", for example, to delimit a path and "¥" can thus be erroneously recognized. Specifically, a file path (a folder name or a file name), if containing a " 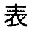 " or " 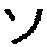 " character, is erroneously delimited at the corresponding position. As a result, the file path is interpreted as a sub-directory that does not exist and transmission may fail due to the illegal document name.

When the device that names the document determines the character code displayable on the device at the destination, it is effective in many uses to consider that the displayable character code is the same as the character code used in the device for naming, because the user of the device for naming is highly likely to be the user of the device at the destination. A good case in point is that, for example, the document bundle data acquired by the document processing apparatus 1 is used in an environment of the own computer. In this case, it is highly likely that the character code used in the document processing apparatus 1, specifically, the character code favorable for the user is set as a display character code of the operation display unit 15 in the document processing apparatus 1 (hereinafter referred to as the "display character code" as appropriate) and the same character code is highly likely to be set in the own computer environment.

In business uses of the document processing apparatus 1, even if the user of the device for naming differs from that of the device at the destination, it is highly likely that the users of the both will belong to the same department of a company. A good case in point is that, for example, the document bundle data acquired by the document processing apparatus 1 is used in an environment of a co-worker's computer. In this case, it is highly likely that the display character code of the operation display unit 15 is set to be favorable for all employees who belong to the corresponding department and the same character code is set in the environment of computers of all employees of the department.

Thus, in the embodiment, the display character code of the operation display unit 15 is taken into consideration when the rule for determining the character code is established. A user's preference should be reflected in the display character code of the operation display unit 15. For example, if the setting of the operation display unit 15 is Japanese (the display character code is, for example, the SJIS code), it is considered that the user prefers Japanese notation of the document name. Thus, as will be described later, user-friendliness can be greatly improved by automatically determining to authorize the display character code of the operation display unit 15 as the character code to be used for naming the document.

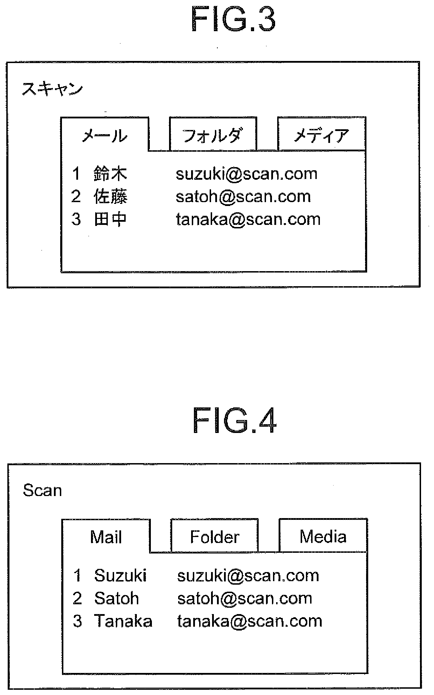

FIGS. 3 and 4 are diagrams illustrating exemplary operation screens displayed on the operation display unit 15. FIG. 3 is a diagram illustrating an exemplary operation screen when a Japanese character code (e.g., the SJIS code) is set as the display character code of the operation display unit 15. FIG. 4 is a diagram illustrating another exemplary operation screen when another Japanese character code (e.g., the ASCII code) is set as the display character code of the operation display unit 15. In the exemplary operation screens illustrated in FIGS. 3 and 4, although the both offer the same function, notations in the both are different from each other due to different display character codes set for the operation display unit 15. Specifically, the notation in the exemplary operation screen illustrated in FIG. 3 is the Japanese notation and that illustrated in FIG. 4 is the English notation. When the display character code of the operation display unit 15 is authorized as the character code used for naming the document, the document is named in Japanese if the notation in the operation display unit 15 is the Japanese notation as illustrated in FIG. 3, and the document is named in English if the notation in the operation display unit 15 is the English notation as illustrated in FIG. 4.

It is noted that the exemplary operation screens illustrated in FIGS. 3 and 4 serve as setting screens for setting transmission conditions. The user touches the Mail tab and then performs mail transmission for the document bundle data. Alternatively, the user touches the Folder tab and then performs folder transmission for the document bundle data. Additionally, the user touches the Media tab and then saves the document bundle data in a predetermined recording medium. For example, to perform mail transmission for the document bundle data, the user touches the Mail tab. In response to this, as illustrated in FIGS. 3 and 4, destination address information listing destination addresses selectable as a destination of the document bundle data is displayed using the display character code of the operation display unit 15. The user touches an intended destination address to select it from the information to thereby set the address that is one of transmission conditions.

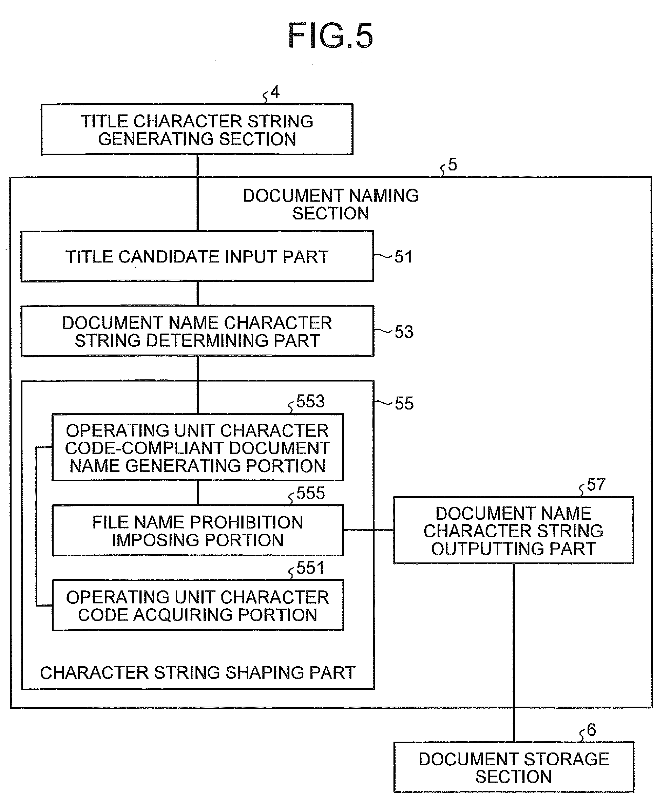

The following describes a configuration for automatically determining the character code used in naming the document. FIG. 5 is a block diagram illustrating an exemplary internal configuration of the document naming section 5. As illustrated in FIG. 5, the document naming section 5 comprises a title candidate input part 51, a document name character string determining part 53 as a determination unit, a character string shaping part 55 as a shaping unit, and a document name character string outputting part 57.

The title candidate input part 51 receives from the title character string generating section 4 an input of the OCR processing result to which the title candidate information is appended. The received OCR processing result is output to the document name character string determining part 53.

The document name character string determining part 53 selects one candidate from among the title character string candidates based on the title candidate information appended to the OCR processing result received from the title candidate input part 51, thereby determining the document name character string that serves as a basis for the document name. The determined document name character string is output to an operating unit character code-compliant document name generating portion 553 of the character string shaping part 55.

The character string shaping part 55 includes an operating unit character code acquiring portion 551 as an acquiring unit, a file name prohibition imposing portion 555, and the operating unit character code-compliant document name generating portion 553. The character string shaping part 55 shapes the document name character string input thereto from the document name character string determining part 53.

The operating unit character code acquiring portion 551 acquires the type of the character code set as the display character code of the operation display unit 15 (display character code type). The acquired display character code type is output to the operating unit character code-compliant document name generating portion 553.

The operating unit character code-compliant document name generating portion 553 imposes, based on the display character code type input thereto from the operating unit character code acquiring portion 551, a restriction (hereinafter referred to as a "character code restriction") on the document name character string input thereto from the document name character string determining part 53 and generates a new document name character string. The generated document name character string is output to the file name prohibition imposing portion 555.

One of the following three character code restrictions is imposed. The first and second character code restrictions correspond to a method for establishing a rule for determining the above-described character code. The third character code restriction corresponds to a method for using the printable ASCII code.

Specifically, the first character code restriction authorizes the display character code of the operation display unit 15 as a naming character code and deletes characters other than the authorized naming character code, that is, the display character code. The second character code restriction, while authorizing the display character code of the operation display unit 15 as with the first character code restriction, converts characters convertible to the authorized display character code and deletes those inconvertible. The third character code restriction authorizes the printable ASCII code as the naming character code, converting characters convertible to the authorized naming character code, that is, the printable ASCII code and deleting those inconvertible.

Each of the character code restrictions will be described below using an example in which the notation in the operation display unit 15 is the English notation and the display character code type is the ASCII code. It is here assumed that the document name character string input from the document name character string determining part 53 is the follwing Japanese character string (a) or (b) in the double-byte SJIS code. 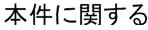 Q&A (Q&A concerning this matter) ... (a)
**1776** 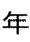 7 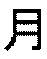 4 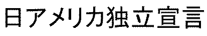 (July 4, 1776 American Declaration of Independence) ... (b)

Imposing the first character code restriction deletes the characters other than the ASCII code being the display character code type, so that the operating unit character code-compliant document name generating portion 553 deletes all characters, in the both cases of (a) and (b). The operating unit character code-compliant document name generating portion 553, if deleting all characters as described above, automatically generates a character string such as the date or the serial number, using the related-art naming technique to thereby create a new document name character string. If part or all of the characters is left, the operating unit character code-compliant document name generating portion 553 sets the part or all of the characters to be the new document name character string.

Imposing the second character code restriction leaves only those characters that have been converted to the ASCII code being the display character code type. Thus, for the document name character string (a), the operating unit character code-compliant document name generating portion 553 converts "Q&A" left as the characters convertible to the ASCII code (single-byte) and then generates the following (a1) as the new document name character string. For the document name character string (b), the operating unit character code-compliant document name generating portion 553 converts "177674" left as the characters convertible to the ASCII code (single-byte) and then generates the following (b1) as the new document name character string.
Q&A ... (a1)
177674 ... (b1)

The third character code restriction will be described below. The ASCII code provided a basis for an ISO standard, 7-bit character code ISO/IEC646. After the 8-bit character code ISO/IEC8859 has thereafter become mainstream, many of encoding systems for various types of characters used all over the world assign other characters to code values of 128 and onward that are not used in the ASCII code. The printable ASCII code characters used in the third character code restriction constitute a character set of the ASCII code excluding control codes. Specifically, the printable ASCII characters comprise a null character being ASCII 32 (a decimal number) and single-byte alphanumeric characters, punctuation marks, and symbols being ASCII 33 (a decimal number) to 126 (a decimal number). As such, the printable ASCII code is the most basic character set among all character codes used in the world. Thus, many computer systems can display the printable ASCII code character string.

The third character code restriction may preferably be adopted when the document bundle data is assumed to be used by a plurality of computer systems. The third character code restriction may still be adopted as appropriate even when the document bundle data is assumed to be used by a single computer system. This is because of the following reason: that is, the character code displayable by a computer system does not necessarily match the character code of the text data included in the document bundle data stored in the computer system. Thus, there can be a mismatch between the character code displayable by the computer system and the character code of the document name character string being one of the title character string candidates extracted from the text data included in the document bundle data.

For example, a computer system, even if being capable of displaying English only, can understandably store therein document bundle data having contents in Japanese (described in Japanese). If the contents of the document is in Japanese, however, the document is named in Japanese as is, resulting in character corruption of the document name occurring when the document is later used. Naming the document in the printable ASCII code in such a case can prevent the document name from being corrupted and does not reduce the usability. When a document bundle described in any language using an accent mark, such as German umlaut, in particular, is handled, the document name can be prevented from being corrupted in a computer system that does not support the display of the accent mark.

To impose the third character code restriction that authorizes the printable ASCII code, the operating unit character code-compliant document name generating portion 553 converts, from the document name character string of (a), "Q&A" left as being convertible to the printable ASCII code (single-byte), thereby generating the following (a2) as a new document name character string. In addition, the operating unit character code-compliant document name generating portion 553 converts, from the document name character string of (b), "177674" left as being convertible to the printable ASCII code (single-byte), thereby generating the following (b2) as a new document name character string.
Q&A ... (a2)
177674 ... (b2)

By imposing the above-described character code restrictions, part of the document name character strings of (a) and (b) determined by the document name character string determining part 53 is deleted as in (a1), (a2) and (b1), (b2), and thus effect of allowing the contents of the document to be identified is reduced. Still, unlike the related-art naming technique that automatically names a document without regard to its contents using, for example, the date and the serial number, the imposition of the character code restrictions enables a document name that reflects the contents of the document to be given to the document.

The file name prohibition imposing portion 555 imposes a restriction unique to the computer system (hereinafter referred to as a "file name restriction") on the document name character string input thereto from the operating unit character code-compliant document name generating portion 553 to thereby shape the document name character string such that a prohibition is not violated when the document name character string is handled as a file name in the computer system. The shaped document name character string is output to the document name character string outputting part 57.

The file name restriction limits types and the number of characters used in the document name character string. Specifically, computer systems have characters that cannot be used therein as a file name. In Windows (a registered trademark), for example, the single-byte characters of "¥", "/" ":", "*", "?", """ "<", ">", and "|", which are specified for use in other specific purposes, are prohibited from being used in file names. In addition, there is an upper limit set for the length (number of characters) of the file name. Thus, the document name used as the file name cannot violate the foregoing prohibition. The file name prohibition imposing portion 555 thus replaces prohibited characters that are prohibited from being used for the file name as described above with other non-prohibited characters. If the number of characters in the document name character string exceeds the upper limit of the file name, the file name prohibition imposing portion 555 adjusts the number of characters by cutting out excess characters, e.g., the number of excess characters counting from a trailing end of the document name character string. The imposition of the file name restriction as described above allows the document name character string to be shaped into one appropriate for the file name.

The document name character string outputting part 57 outputs the document name character string input thereto from the file name prohibition imposing portion 555 to the document storage section 6.

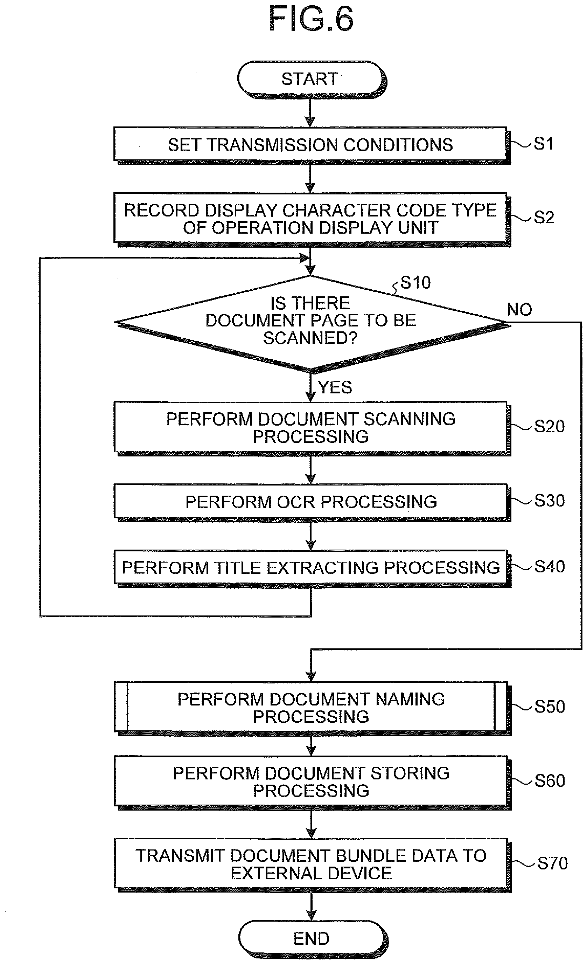

FIG. 6 is a flowchart illustrating steps for naming a document in the embodiment. The document processing apparatus 1 operates according to the steps illustrated in FIG. 6 to perform the document processing method. It is noted that, in FIG. 6, like or corresponding steps are identified by the same reference numerals as those used in FIG. 2 and the description thereof will be omitted.

An operation input by the user is accepted via the operation display unit 15 and the transmission conditions for the document bundle data are set (step S1). The transmission conditions include document scanning conditions in addition to, for example, the transmission device, an address of the destination, and the number of copies to be transmitted. The document scanning conditions include resolution, a scanning mode type, and/or a scanning size. Additionally, a display character code setting of the operation display unit 15 is referred to acquire and record the display character code type (step S2). The process at step S10 is thereafter performed.

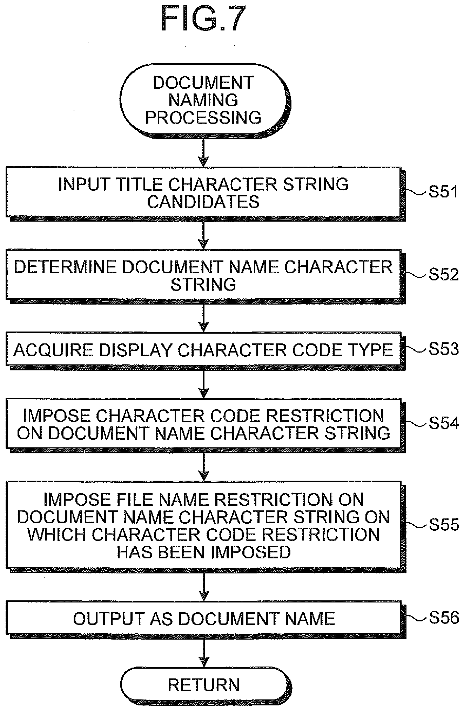

When all the process from step S20 to step S40 are performed for each of all document pages on the document table, the document naming section 5 performs the document naming processing (step S50). FIG. 7 is a flowchart illustrating detailed steps of the document naming processing. As illustrated in FIG. 7, in the document naming processing, the title candidate input part 51 first inputs the OCR processing result to which the title candidate information is appended at step S40 of FIG. 6 (step S51).

Next, the document name character string determining part 53 determines the document name character string based on the title candidate information of the OCR processing result (step S52). The process at step S52 is performed by the document name character string determining part 53 selecting, for example, from among the title character string candidates of the document image data on the first page, the title character string candidate that ranks first in the evaluation ranking as the document name character string to serve as a basis for the document name.

The operating unit character code acquiring portion 551 acquires the display character code type recorded at step S2 of FIG. 6 (step S53). The operating unit character code-compliant document name generating portion 553 then imposes, based on the display character code type acquired at step S53, a character code restriction on the document name character string determined at step S52 (step S54). If, at this time, the character code restriction that authorizes the display character code as the naming character code is to be imposed, the operating unit character code-compliant document name generating portion 553 generates a new document name character string according to the display character code type acquired at step S53. It is noted that the specific one out of the abovementioned three character code restrictions to be imposed may be determined in advance, for example, according to a selecting operation performed by the user.

The file name prohibition imposing portion 555 imposes the file name restriction on the document name character string generated at step S54 (step S55). Thereafter, the document name character string outputting part 57 outputs as a document name the document name character string on which the file name restriction is imposed, to the document storage section 6 (step S56). The operation is then returned to step S50 of FIG. 6 and the process at step S60 is performed.

At step S60, the document storage section 6 performs document storing processing. Thereafter, the document processing unit 2 functions as a transmitting unit that performs a step of transmitting the document bundle data stored at step S60 (the document bundle data having the document name named at step S50 as its file name) to the external device via the communicating unit 17 according to the transmission conditions set at step S1 (step S70).

As described heretofore, in the embodiment, the document name character string that serves as a basis for the document name is determined from among the title character string candidates extracted from the document image data. The character code restriction is then imposed on the document name character string and the file name restriction is further imposed thereon to thereby shape the document name character string. A document name is thus created. This allows the document name character string to be automatically shaped by limiting the character code to be used for naming the document to, for example, only the character code set as the display character code of the operation display unit 15. The document name can thus be prevented from being corrupted when displayed, without causing the number of operations required for the user to perform in naming the document to increase. In addition, the document is named so as to be most favorable for the user. The user can thus identify the contents of the document bundle data using the document name and select the necessary document bundle data easily by referring to the document name. The embodiment therefore prevents the document name from being corrupted and considerably improves the usability for the user.

The display character code of the operation display unit 15 can be changed as appropriate by the user. Specifically, the document processing unit 2 functions as a changing unit to accept a setting change operation and changes the display character code set for the operation display unit 15 according to the setting change operation. After the display character code is changed in the foregoing manner, the new display character code after the change is set for the naming character code. This enables the following. Specifically, assume, for example, a case in which the display character code set for the operation display unit 15 is Japanese and the notation of the operation screen is the Japanese notation. Even with these settings, to scan a document bundle described in any language other than Japanese, e.g., English or French, the display character code set for the operation display unit 15 can be changed to the corresponding language to thereby allow the document to be named in the new language.

The embodiment has described a case in which the document bundle data is transmitted from the document processing apparatus 1 to the external device. Nonetheless, the document bundle data may be used in the document processing apparatus. In such a case, too, authorizing the display character code of the operation display unit 15 prevents the document name from being corrupted.

The embodiment has described a case in which the document name is given by scanning a document bundle (consisting of a plurality of document pages). The embodiment can still be applied to naming a document by scanning a single document page.

In the embodiment described above, one of the title character string candidates extracted from the text data contained in the document bundle data is determined as the document name character string and the determined document name character string is shaped to set the shaped document name character string as the document name. In contrast, a document name may include the shaped document name character string as part thereof. For example, a document name may be a combination of the shaped document name character string and the character string automatically generated through the related-art naming technique using the date, the serial number, or the like.

The embodiment describes the character code restrictions that authorize the display character code of the operation display unit 15 as the naming character code. There may, however, be not a few cases in which a need exists for authorizing any character code other than the display character code of the operation display unit 15. For example, when document bundle data needs to be transmitted from the document processing apparatus 1 to the outside of the company (to a foreign country, in particular), the display character code of the operation display unit 15 (e.g., Japanese) may be very often different from the character code displayable on the device at the destination (e.g., English). To prevent the file name from being corrupted in the device at the destination even in such a case, a system needs a mechanism that changes the naming character code to be authorized as appropriate.

Here, to transmit document bundle data to an external device, the address of the destination is set as the transmission conditions. The following arrangement may be made, if the naming character code to be authorized needs to be changed as appropriate: specifically, a character code restriction that authorizes the character code used in describing the destination addresses, instead of the display character code of the operation display unit 15, may be imposed.

In this case, the operating unit character code acquiring portion 551 performs a step of acquiring the type of the character code (destination address character code) used in describing the destination address information set as the destination address at step S1 of FIG. 6, instead of the step at step S53 of FIG. 7. At step S54, the operating unit character code-compliant document name generating portion 553 imposes the character code restriction that authorizes the destination address character code as the naming character code and performs a step of generating a new document name character string according to the type.

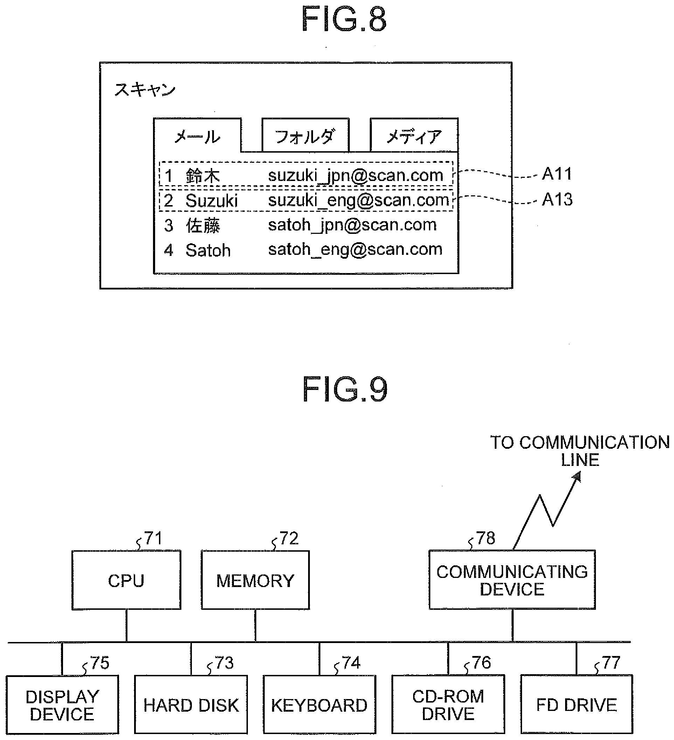

FIG. 8 is a diagram illustrating still another exemplary operation screen displayed on the operation display unit 15, and illustrates a setting screen for setting the transmission conditions. The setting screen illustrated in FIG. 8 is for setting the destination address for the document bundle data as with the setting screen described with reference to FIGS. 3 and 4, and lists information on destination addresses selectable as a destination of the document bundle data. In the list of information on destination addresses illustrated in FIG. 8, information on destination addresses in Japanese notation and information on destination addresses in English notation are mixed.

In this modified example, if information on a destination address A11 described as " 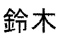 ", for example, is selected, the corresponding document is named in Japanese (the character code is, for example, the SJIS code). If information on a destination address A13 described as "Suzuki" is selected, the corresponding document is named in English (the character code is, for example, the ASCII code).

The modified example allows the naming character code to be changed according to the selected destination address information. This eliminates the need for performing a troublesome operation of manually changing the character codes each time the destination address information is selected, so that the naming character code can be easily and properly changed. Thus, the user does not need to perform an operation of specifying the naming character code, apart from the selection of the destination address information. The user can specify the character code to be used for naming the document at the same time that he or she selects the destination address information. Because the selection of the destination address information is a necessary step to be performed, the foregoing does not increase burden on the user.

It is here noted that the character code to be used in describing each address of the destination address information may be arranged to be changed as appropriate by the user. In this case, the document processing unit 2 functions as a changing unit to accept a destination address notation change operation that specifies the destination address information and changes the character code to describe the corresponding destination address information according to the destination address notation change operation. The character code used for describing the destination address information is thus changed. When that particular destination address information is thereafter selected, the character code after the change is authorized as the naming character code.

The document processing apparatus 1 according to the embodiment described heretofore can also be achieved by causing a general-purpose computer, such as a personal computer or a workstation, connected to, for example, a scanner or a multifunction peripheral for scanning document bundle data to execute a previously prepared computer program (document processing program). FIG. 9 is a diagram illustrating an exemplary hardware configuration of the document processing apparatus (computer) in the above case. The document processing apparatus illustrated in FIG. 9 comprises a CPU (processor) 71, a memory 72, such as a ROM, a hard disk 73, a keyboard 74, a display device 75, a CD-ROM drive 76, a FD drive 77, and a communicating device 78 each connected to each other by, for example, a system bus so as to be capable of inputting and outputting data.

A document processing program to be executed by the computer is provided by being recorded on a computer-readable recording medium in a file in an installable format or an executable format. Nonlimiting examples of the recording medium include a CD-ROM, a flexible disk (FD), a CD-R, and a digital versatile disk (DVD). It is noted that the document processing program may also be configured so as to be stored in a computer connected to a communication line, such as the Internet, and to be downloaded via the communication line. The document processing program may still be configured so as to be provided or distributed over the communication line such as the Internet. The document processing program may even be configured so as to be provided by being incorporated in advance in the memory 72.

The document processing program has a modular configuration including each of the elements that constitute the document processing unit 2 illustrated in FIG. 1 and 5. The CPU 71 loads the document processing program from the memory 72 and executes it. This loads the elements that constitute the document processing unit 2 on a main storage and achieves the above-described elements on the main storage.

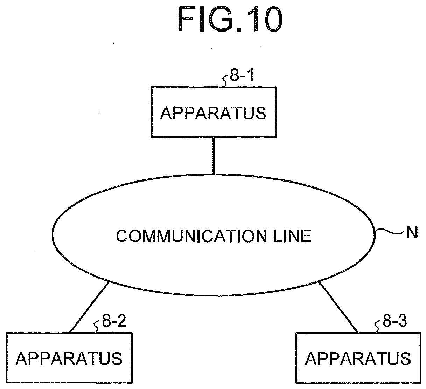

Additionally, the document processing apparatus 1 according to the embodiment may be achieved as a system comprising a plurality of apparatuses. FIG. 10 is a diagram illustrating an exemplary system configuration of the document processing apparatus. The system illustrated in FIG. 10 comprises a plurality of (three in FIG. 10) apparatuses 8-1 to 8-3 connected to each other via a communication line N. Each of the apparatuses 8-1 to 8-3 shares the processing performed by a corresponding one of the elements constituting the document processing apparatus 1 illustrated in FIGS. 1 to 5, thereby achieving as a whole the functions achieved by the document processing apparatus 1.

The embodiment has been described for a case in which the character code to be used for naming the document is automatically determined according to the display character code of the operation display unit 15. In contrast, if the document processing apparatus is achieved with, for example, a computer that includes an operating unit, such as the keyboard 74, and the display device 75 as a display unit separately from each other as in the hardware configuration illustrated in FIG. 9, the character code to be used for naming the document may be automatically determined according to the character display code of the display unit (the display device 75).

The embodiment achieves an effect of preventing character corruption of the document name and improving usability for the user.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. A document processing apparatus (1) that performs image processing on document image data to thereby extract character information and assign a document name using the character information, the document processing apparatus (1) comprising:
a display unit (15);
an acquiring unit (551) operable to acquire a character code of characters displayable on the display unit (15);
a determination unit (53) operable to determine a document name character string that serves as a basis for the document name, from the character information;
a shaping unit (55) operable to shape the determined document name character string based on the acquired character code;
and a transmitting unit (2) operable to cause the display unit (15) to display a list of information on destination addresses selectable as a destination of the document image data and to transmit the document image data to an external device according to destination address information selected from the list,
**characterized in that**:
the acquiring unit (551) is operable to acquire a character code used for notation of the selected destination address information,
and the shaping unit is then operable to shape the determined document name character string based on this acquired character code so that it is displayable at the destination.

2. The document processing apparatus (1) according to claim 1, wherein the shaping unit (55) is operable to convert characters included in the extracted document name character string to characters of the acquired character code.

3. The document processing apparatus (1) according to claim 1 or 2, wherein the acquiring unit (551) is operable to acquire the character code set as a display character code of the display unit (15).

4. The document processing apparatus (1) according to claim 3, further comprising:
a changing unit (2) operable to change a setting of a character code set as the display character code for the display unit (15) according to a setting change operation.

5. The document processing apparatus (1) according to any one of the preceding claims, further comprising:
a changing unit (2) operable to change a character code used for notation of the destination address information according to a destination address notation change operation.

6. A document processing method that performs image processing on document image data to thereby extract character information and assign a document name using the character information, the document processing method comprising the following steps:
acquiring (S53) a character code of characters displayable on a display unit (15);
determining (S52) a document name character string that serves as a basis for the document name, from the character information;
shaping (S54) the determined document name character string based on the acquired character code;
displaying on the display unit a list of information on destination addresses selectable as a destination of the document image data, and transmitting the document image data to an external device according to destination address information selected from the list;
and **characterised by** the following steps:
acquiring a character code used for notation of the selected destination address information;
and shaping the determined document name character string based on this acquired character code so that it is displayable at the destination.

7. A computer program product comprising a non-transitory computer-usable medium having computer-readable program codes embodied in the medium, wherein the program codes when executed cause a computer that performs image processing on document image data to thereby extract character information and assign a document name using the character information to function as an acquiring unit (551) operable to acquire a character code of characters displayable on the display unit (15);
a determination unit (53) operable to determine a document name character string that serves as a basis for the document name, from the character information;
a shaping unit (55) operable to shape the determined document name character string based on the acquired character code;
and a transmitting unit (2) operable to cause the display unit (15) to display a list of information on destination addresses selectable as a destination of the document image data and to transmit the document image data to an external device according to destination address information selected from the list, wherein
the acquiring unit (551) is operable to acquire a character code used for notation of the selected destination address information,
and the shaping unit is then operable to shape the determined document name character string based on this acquired character code so that it is displayable at the destination.

## Patentansprüche

1. Dokumentenverarbeitungsvorrichtung (1), die eine Bildverarbeitung an Dokumentenbilddaten ausführt, um dadurch Zeicheninformationen zu extrahieren und einen Dokumentennamen unter Verwendung der Zeicheninformationen zuzuweisen, wobei die Dokumentenverarbeitungsvorrichtung (1) umfasst:
eine Anzeigeeinheit (15);
eine Erlangungseinheit (551), die betriebsfähig ist, einen Zeichencode von Zeichen zu erlangen, der auf der Anzeigeeinheit (15) anzeigbar ist;
eine Bestimmungseinheit (53), die betriebsfähig ist, eine Dokumentennamenzeichenfolge, die als Basis für den Dokumentennamen dient, von den Zeicheninformationen zu bestimmen;
eine Bildungseinheit (55), die betriebsfähig ist, die bestimmte Dokumentennamenzeichenfolge basierend auf dem erlangten Zeichencode zu bilden;
und eine Sendeeinheit (2), die betriebsfähig ist, die Anzeigeeinheit (15) zu veranlassen, eine Liste von Informationen über Zieladressen, die als ein Ziel von Dokumentenbilddaten wählbar sind, anzuzeigen und die Dokumentenbilddaten gemäß Zieladresseninformationen, die aus der Liste ausgewählt wurden, an eine externe Vorrichtung zu senden,
**dadurch gekennzeichnet, dass**:
die Erlangungseinheit (551) betriebsfähig ist, einen Zeichencode zu erlangen, der für die Schreibweise der ausgewählten Zieladresseninformationen verwendet wird,
und die Bildungseinheit dann betriebsfähig ist, die bestimmte Dokumentennamenzeichenfolge basierend auf diesem erlangten Zeichencode zu bilden, sodass sie am Ziel anzeigbar ist.

2. Dokumentenverarbeitungsvorrichtung (1) nach Anspruch 1, wobei die Bildungseinheit (55) betriebsfähig ist, Zeichen, die in der extrahierten Dokumentennamenzeichenfolge beinhaltet sind, in Zeichen des erlangten Zeichencodes umzuwandeln.

3. Dokumentenverarbeitungsvorrichtung (1) nach Anspruch 1 oder 2, wobei die Erlangungseinheit (551) betriebsfähig ist, den Zeichencodesatz als einen Anzeigezeichencode der Anzeigeeinheit (15) zu erlangen.

4. Dokumentenverarbeitungsvorrichtung (1) nach Anspruch 3, ferner umfassend:
eine Änderungseinheit (2), die betriebsfähig ist, eine Einstellung eines Zeichencodesatzes als den Anzeigezeichencode für die Anzeigeeinheit (15) gemäß einer Einstellungsänderungsoperation zu ändern.

5. Dokumentenverarbeitungsvorrichtung (1) nach einem der vorstehenden Ansprüche, ferner umfassend:
eine Änderungseinheit (2), die betriebsfähig ist, einen Zeichencode, der für die Schreibweise der Zieladresseninformationen verwendet wird, gemäß einer Zieladressenschreibweisenänderungsoperation zu ändern.

6. Dokumentverarbeitungsverfahren, das eine Bildverarbeitung an Dokumentenbilddaten ausführt, um dadurch Zeicheninformationen zu extrahieren und einen Dokumentennamen unter Verwendung der Zeicheninformationen zuzuweisen, wobei das Dokumentverarbeitungsverfahren, die folgenden Schritte umfasst:
Erlangen (S53) eines Zeichencodes von Zeichen, die auf einer Anzeigeeinheit (15) anzeigbar sind;
Bestimmen (S52) einer Dokumentennamenzeichenfolge, die als Basis für den Dokumentennamen dient, von den Zeicheninformationen;
Bilden (S54) der bestimmten Dokumentennamenzeichenfolge basierend auf dem erlangten Zeichencode;
Anzeigen, an der Anzeigeeinheit, einer Liste von Informationen über Zieladressen, die als ein Ziel der Dokumentenbilddaten wählbar sind, und Senden der Dokumentenbilddaten an eine externe Vorrichtung gemäß Zieladresseninformationen, die aus der Liste ausgewählt wurden, und **gekennzeichnet durch** die folgenden Schritte:
Erlangen eines Zeichencodes, der für die Schreibweise der ausgewählten Zieladresseninformationen verwendet wird;
und Bilden der bestimmten Dokumentennamenzeichenfolge basierend auf diesem erlangten Zeichencode, sodass sie am Ziel anzeigbar ist.

7. Computerprogrammprodukt, das ein nicht flüchtiges computernutzbares Medium mit in dem Medium verkörperten computerlesbaren Programmcodes umfasst, wobei die Programmcodes bei Ausführung einen Computer, der Bildverarbeitung an Dokumentenbilddaten ausführt, veranlassen, dadurch Zeicheninformationen zu extrahieren und einen Dokumentennamen unter Verwendung der Zeicheninformationen zuzuweisen, um als eine Erlangungseinheit (551) zu fungieren, die betriebsfähig ist, einen Zeichencode von Zeichen zu erlangen, die auf der Anzeigeeinheit (15) anzeigbar sind;
eine Bestimmungseinheit (53), die betriebsfähig ist, eine Dokumentennamenzeichenfolge, die als Basis für den Dokumentennamen dient, von den Zeicheninformationen zu bestimmen;
eine Bildungseinheit (55), die betriebsfähig ist, die bestimmte Dokumentennamenzeichenfolge basierend auf dem erlangten Zeichencode zu bilden;
und eine Sendeeinheit (2), die betriebsfähig ist, die Anzeigeeinheit (15) zu veranlassen, eine Liste von Informationen über Zieladressen, die als ein Ziel von Dokumentenbilddaten wählbar sind, anzuzeigen und die Dokumentenbilddaten gemäß Zieladresseninformationen, die aus der Liste ausgewählt wurden, an eine externe Vorrichtung zu senden, wobei
die Erlangungseinheit (551) betriebsfähig ist, einen Zeichencode zu erlangen, der für die Schreibweise der ausgewählten Zieladresseninformationen verwendet wird,
und die Bildungseinheit dann betriebsfähig ist, die bestimmte Dokumentennamenzeichenfolge basierend auf diesem erlangten Zeichencode zu bilden, sodass sie am Ziel anzeigbar ist.

## Revendications

1. Appareil de traitement de documents (1) qui effectue un traitement d'image sur des données d'image de document afin d'extraire des informations de caractères et d'affecter un nom de document à l'aide des informations de caractères, l'appareil de traitement de documents (1) comprenant :
une unité d'affichage (15) ;
une unité d'acquisition (551) capable d'acquérir un code de caractère des caractères qui peuvent être affichés sur l'unité d'affichage (15) ;
une unité de détermination (53) capable de déterminer une chaîne de caractères de nom de document qui sert de base pour le nom de document, à partir des informations de caractères ;
une unité de mise en forme (55) capable de mettre en forme la chaîne de caractères de nom de document déterminé sur la base du code de caractères acquis ;
et une unité de transmission (2) capable de permettre à la liste d'affichage (15) d'afficher une liste d'informations sur les adresses de destination qui peuvent être sélectionnées comme destination des données d'image de document et de transmettre les données d'image de document à un dispositif externe selon les informations d'adresse de destination sélectionnées dans la liste,
**caractérisé en ce que** :
l'unité d'acquisition (551) est capable d'acquérir un code de caractère utilisé pour la notation des informations d'adresse de destination sélectionnées,
et l'unité de mise en forme est capable de mettre en forme la chaîne de caractères de nom de document déterminé sur la base de ce code de caractère acquis de sorte qu'elle puisse être affichée au niveau de la destination.

2. Appareil de traitement de documents (1) selon la revendication 1, dans lequel l'unité de mise en forme (55) est capable de convertir les caractères inclus dans la chaîne de caractères de nom de document extraite en caractères du code de caractère acquis.

3. Appareil de traitement de documents (1) selon la revendication 1 ou 2, dans lequel l'unité d'acquisition (551) est capable d'acquérir le code de caractère défini comme un code de caractère à afficher de l'unité d'affichage (15).

4. Appareil de traitement de documents (1) selon la revendication 3, comprenant en outre :
une unité de modification (2) capable de modifier un paramètre d'un code de caractère défini comme le code de caractère à afficher pour l'unité d'affichage (15) selon une opération de changement de paramètre.

5. Appareil de traitement de documents (1) selon l'une quelconque des revendications précédentes, comprenant en outre :
une unité de modification (2) capable de modifier un code de caractère utilisé pour la notation des informations d'adresse de destination selon une opération de changement de notation d'adresse de destination.

6. Procédé de traitement de documents qui effectue un traitement d'image sur des données d'image de document afin d'extraire des informations de caractères et d'affecter un nom de document en utilisant les informations de caractères, le procédé de traitement de documents comprenant les étapes suivantes :
l'acquisition (S53) d'un code de caractère de caractères qui peuvent être affichés sur une unité d'affichage (15) ;
la détermination (S52) d'une chaîne de caractères de nom de document qui sert de base pour le nom de document, à partir des informations de caractères ;
la mise en forme (S54) de la chaîne de caractères de nom de document déterminé sur la base du code de caractères acquis ;
l'affichage, sur l'unité d'affichage, d'une liste d'informations sur les adresses de destination qui peuvent être sélectionnées comme destination des données d'image de document, et la transmission des données d'image de document à un dispositif externe selon les informations d'adresse de destination sélectionnées dans la liste ;
et **caractérisé par** les étapes suivantes :
l'acquisition d'un code de caractère utilisé pour la notation des informations d'adresse de destination sélectionnées ;
la mise en forme de la chaîne de caractères de nom de document déterminé sur la base de ce code de caractère acquis de sorte qu'elle puisse être affichée au niveau de la destination.

7. Produit de programme informatique comprenant un support non transitoire utilisable par un ordinateur ayant des codes de programme lisibles par un ordinateur stockés sur le support, dans lequel les codes de programme, lorsqu'ils sont exécutés, permettent à un ordinateur d'exécuter un traitement d'image sur des données d'image de document afin d'extraire des informations de caractères et d'affecter un nom de document en utilisant les informations de caractères de façon à fonctionner comme une unité d'acquisition (551) capable d'acquérir un code de caractère de caractères qui peuvent être affichés sur l'unité d'affichage (15) ;
une unité de détermination (53) capable de déterminer une chaîne de caractères de nom de document qui sert de base pour le nom de document, à partir des informations de caractères ;
une unité de mise en forme (55) capable de modifier la chaîne de caractères de nom de document déterminé sur la base du code de caractère acquis ;
et une unité de transmission (2) capable de permettre à l'unité d'affichage (15) d'afficher une liste d'informations sur les adresses de destination qui peuvent être sélectionnées comme destination des données d'image de document et de transmettre les données d'image de document à un dispositif externe selon les informations d'adresse de destination sélectionnées dans la liste, dans lequel
l'unité d'acquisition (551) est capable d'acquérir un code de caractère utilisé pour la notation des informations d'adresse de destination sélectionnées,
et l'unité de mise en forme est ensuite capable de mettre en forme la chaîne de caractères de nom de document déterminé sur la base de ce code de caractère acquis de sorte qu'elle puisse être affichée au niveau de la destination.
